# EUROPÄISCHE PATENTSCHRIFT

(11) **EP 2 514 127 B1**
(45) Veröffentlichungstag und Bekanntmachung des Hinweises auf die Patenterteilung: **05.06.2019**
(21) Anmeldenummer: 10776655.2
(22) Anmeldetag: 04.11.2010
(51) Int. Cl.: H04L 1/00, H05B 33/08

(54) **VERFAHREN UND VORRICHTUNG ZUR OPTISCHEN ÜBERTRAGUNG VON DATEN**
METHOD AND DEVICE FOR OPTICAL TRANSMISSION OF DATA
PROCÉDÉ ET DISPOSITIF DE TRANSMISSION OPTIQUE DE DONNÉES

(30) Priorität: 15.12.2009 DE 102009058155
(43) Veröffentlichungstag der Anmeldung: 24.10.2012
(73) Patentinhaber: Siemens Aktiengesellschaft, 80333 München (DE)
(72) Erfinder: WALEWSKI, Joachim, 82008 Unterhaching (DE)
(86) Internationale Anmeldenummer: PCT/EP2010/066803
(87) Internationale Veröffentlichungsnummer: WO 2011/082860

(56) Entgegenhaltungen:
- EP-A1- 1 912 354
- WO-A1-03/019805
- US-A1- 2006 239 689

## Beschreibung

Die Erfindung betrifft ein Verfahren und eine Vorrichtung zur optischen Übertragung von Daten mittels einer Lichtquelle.

In Gebäuden können lichtemittierende Dioden (LED) zur Beleuchtung von Räumen eingesetzt werden. Lichtemittierende Dioden, auch Leuchtdioden genannt, zeichnen sich durch einen niedrigen Energieverbrauch und eine lange Lebensdauer aus. Zur Beleuchtung von Räumen innerhalb von Gebäuden werden dort vorgesehene Leuchtdioden mit einer Pulsbreitenmodulation moduliert, um die Beleuchtungsstärke innerhalb eines Raumes entsprechend den jeweiligen Anforderungen einstellen zu können. Eine Pulsbreitenmodulation zum Zwecke einer Helligkeitseinstellung wird in der Fachwelt auch als »Dimming« bezeichnet.

Die weite Verbreitung von mobilen Endgeräten, wie beispielsweise mobilen Telefonen, erfordert eine schnelle Datenübertragung über drahtlose Schnittstellen und drahtlose lokale Datennetzwerke.

Zur gleichzeitigen Helligkeitseinstellung und Datenübertragung über eine Lichtquelle sind bereits Verfahren bekannt.

Aus einer am 28.04.2010 eingereichten, noch unveröffentlichten Anmeldung der Anmelderin mit dem Anmeldeaktenzeichen PCT/EP2010/055703 geht ein Verfahren zur optischen Übertragung von Daten mittels einer pulsbreitenmodulierten Lichtquelle hervor, bei dem ein zur Helligkeitseinstellung der pulsbreitenmodulierten Lichtquelle eingestelltes Tastverhältnis als Verhältnis zwischen einer Dunkelzeit der Lichtquelle und einer Periodenlänge eines Pulsbreitenmodulationszyklus vorgegeben ist. Gemäß der dortigen Lehre wird eine Hellzeit innerhalb eines Pulsbreitenmodulationszyklus mit mindestens einer Dunkeltastung in mindestens eine erste und zweite Teilhellzeit aufgeteilt, so dass über Beginn und/oder zeitliche Länge der mindestens einen jeweiligen Dunkeltastung die zu übertragenden Daten kodiert werden. Die Summe der Teilhellzeiten innerhalb des Pulsbreitenmodulationszyklus entspricht dabei im Wesentlichen der Hellzeit gemäß dem vorgegebenen Tastverhältnis. Durch die binäre Kodierung in Teilhellzeiten und Teildunkelzeiten sind die Kodierungstiefe und damit die mit diesem Verfahren erzielbare Datenübertragungsrate begrenzt.

[US 2006/0239689 A1] beschreibt die Verwendung von Licht emittierenden Elementen sowohl zur Beleuchtung als auch zur Übertragung von Daten. Dabei wird ein pulsbreitenmoduliertes PWM-Trägersignal mit einem amplitudenmodulierten Datensignal zu einem Kontrollsignal kombiniert, welches die Lichtemission steuert.

[WO 03/019805 A1] beschreibt die Anpassung eines QAM-Modulationsverfahrens (Quadraturamplitudenmodulation) in einem drahtlosen Kommunikationssystem in Abhängigkeit von einer Verbindungsqualität.

Es ist eine Aufgabe der vorliegenden Erfindung, ein Verfahren und eine Vorrichtung zur optischen Übertragung von Daten über eine bezüglich Ihrer Helligkeit per Dimming einstellbare Lichtquelle zu schaffen, die gegenüber dem Stand der Technik eine höhere Datenübertragungsrate gewährleistet.

Diese Aufgabe wird erfindungsgemäß durch ein Verfahren mit den im Patentanspruch 1 angegebenen sowie durch eine Vorrichtung mit den im Patentanspruch 14 angegebenen Merkmalen gelöst.

Die Erfindung schafft ein Verfahren zur optischen Übertragung von Daten mittels einer pulsbreitenmodulierten optischen Signals, das von einer Lichtquelle, insbesondere von mindestens einer lichtemittierenden Diode geliefert wird. Diese Lichtquelle wird für eine Helligkeitseinstellung mit einer üblichen Pulsbreitenmodulation angesteuert, bei der die Helligkeit mit einem variierbaren Tastverhältnis einstellbar (»dimmbar«) ist.

Das Tastverhältnis ist als Verhältnis zwischen einer Hellzeit des optischen Signals und einer Periodenlänge eines Pulsbreitenmodulationszyklus zu verstehen.

Erfindungsgemäß erfolgt eine Kodierung der zu übertragenden Daten in Symbolen, wobei das optische Signal während der Hellzeit mit einer Pulsamplitudenmodulation moduliert wird. Die Pulsamplitudenmodulation erfolgt dabei in diskreten litudenwerten, bei der eine Amplitude, genauer: eine Amplitude der Sendeleistung, des optischen Signals gemäß einem zu übertragenden Symbol eingestellt wird. Die zu übertragenden Daten werden also in Symbolen übertragen, welche auf einem jeweiligen Amplitudenwert abgebildet werden.

Ergänzend wird erfindungsgemäß zwischen einer Quelle, d.h. der Lichtquelle als Sender des optischen Signals und einer Senke des optischen Signals, also einem Empfänger, eine Übertragungsgüte des optischen Signals erfasst. Diese Erfassung kann dabei permanent oder auch zu bestimmten einstellbaren Zeiten und/oder Ereignissen erfolgen. In Abhängigkeit von der erfassten Übertragungsgüte wird an der Quelle des optischen Signals die Konstellation der zu übertragenden Symbole eingestellt. Gemäß der Erfindung erfolgt eine Datenübertragung also in Form von Symbolen, wobei ein Symbol aus einem oder mehreren binären Bits besteht.

Als Konstellation wird in der digitalen Übertragungstechnik eine definierte Menge an Symbolen bezeichnet, die bei einem Kodierverfahren zum Einsatz kommen. Im erfindungsgemäß eingesetzten binären Kodierverfahren entspricht dies einer die Anzahl der pro Symbol übertragbaren Bits. Wird beispielsweise eine Konstellation aus 16 Symbolen eingesetzt, werden jeweils 4 Bit auf eines von 2⁴, also 16 Symbolen abgebildet.

Während die aus dem Stand der Technik bekannten Verfahren lediglich eine Modulationstiefe von einem Bit aufweisen, nämlich Hell oder Dunkel, gewährleistet die Erfindung in vorteilhafter Weise aufgrund der erhöhten Modulationstiefe eine gegenüber dem Stand der Technik um ein Vielfaches erhöhte Datenübertragungsrate.

In vorteilhafter Weise erlaubt es das erfindungsgemäße Verfahren, dass die Helligkeitseinstellung, also die eingestellte Beleuchtungsstärke, durch die parallel dazu stattfindende optische Datenübertragung nicht beeinflusst wird. Dies ist darauf zurückzuführen, dass aufgrund der Trägheit der menschlichen optischen Wahrnehmung aufmodulierten Amplitudenschwankungen während der Hellzeit nicht wahrnehmbar ist, so dass die aufmodulierten Schwankungen lediglich im Mittelwert der optischen Leistung wahrnehmbar sind.

Ein besonders hervorzuhebender Vorteil der Erfindung ergibt sich durch die erfindungsgemäß vorgesehene Maßnahem, die die Anzahl der pro Symbol übertragbaren Bits bezeichnende Konstellation der Symbole abhängig von der Übertragungsgüte einzustellen. Diese erfinderische Maßnahme wurde aufgrund der Überlegung ergriffen, dass die Pulsbreitenmodulation bei verringert eingestellter Helligkeitseinstellung eine immer geringere Hellzeit nach sich zieht. Die Hellzeit ist jedoch der Träger für die amplitudenmodulierte Übertragung der Symbole. Wird die Leistung des optischen Signals und damit des Trägers verringert, verringert sich daher auch die Übertragungsgüte des optischen Signals. Aufgrund der verringerten Signalstärke erhöhen sich in dieser Situation das Signal-Rausch-Verhältnis (»Signal to Noise Ratio«, SNR) und damit die Bitfehlerrate (»Bit Error Ratio«, BER) am Empfänger. In dieser Situation sieht die erfindungsgemäße Lehre eine Einstellung - in diesem Fall: Verringerung - der Konstellation der Symbole vor, also z.B. auf einen vormaligen Wert von 3 Bits pro Symbol auf 2 Bits pro Symbol. Die sich ergebende niedrigere Übertragungsrate wird zugunsten der wieder verbesserten Übertragungsgüte in Kauf genommen. Die verbesserte Übertragungsgüte ergibt sich anschaulich dadurch, dass auf Empfängerseite nunmehr mit einer geringeren Anzahl von Amplitudenstufen bei der Dekodierung gearbeitet werden muss, wodurch die vormals feineren Stufen in der Hellzeit des optischen Signals nunmehr eine gröbere Abstufung einnehmen, welche sicherer zu dekodieren ist.

Weitere vorteilhafte Weiterbildungen und Ausgestaltung der Erfindung sind Gegenstand der abhängigen Ansprüche.

In einer vorteilhaften Ausgestaltung der Erfindung ist vorgesehen, dass die während einer Hellzeit des optischen Signals eingestellte Amplitude innerhalb dieser Hellzeit konstant bleibt. Mit anderen Worten wird pro Hellzeit genau ein Symbol übertragen. Diese Maßnahme gewährleistet eine sichere Dekodierung auf Empfängerseite.

Gemäß einer weiteren vorteilhaften Ausgestaltung der Erfindung ist vorgesehen, dass im Fall einer einen Schwellwert unterschreitenden Übertragungsgüte die Anzahl der pro Symbol übertragbaren Bits um einen Wert von eins gesenkt wird. Ein Wert von eins für die Absenkung der Konstellation gewährleistet eine Verbesserung der Übertragungsgüte bei einem vertretbaren Rückgang der Datenübertragungsrate. In vorteilhafter Weise führt die erste Absenkung um lediglich ein Bit weiterhin zu einer Vorhersehbarkeit auf Seiten des Empfängers, auf welchem somit ohne Rücksprache mit dem Sender über die Höhe der Absenkung ein Dekodierungswechsel hinsichtlich der Konstellation der Symbole bewerkstelligt werden kann. Sollte die Absenkung nicht ausreichen, wird die Konstellation der Symbole in einem weiteren Iterationsschritt der vorteilhaften Ausgestaltung erneut um einen Wert von 1 Bit abgesenkt.

Gemäß einer weiteren vorteilhaften Ausgestaltung der Erfindung ist vorgesehen, dass die Erfassung der Übertragungsgüte empfängerseitig erfolgt. Dabei wird beispielsweise eine am Empfänger gemessenen Signalstärke und eine am Empfänger gemessenen Rauschstärke erfasst, welche in vorteilhafter Weise eine Berechnung des Signal-Rausch-Verhältnis am Sender und/oder am Empfänger erlauben. In einer alternativen Ausführungsform erfolgt Erfassung der Übertragungsgüte anhand eines Bitfehlerquotienten. Die empfängerseitig erfasste Übertragungsgüte und/oder Änderungen in der empfängerseitig erfassten Übertragungsgüte über einen nicht näher beschriebenen Rückkanal werden an die Quelle des optischen Signals gemeldet.

Gemäß einer alternativen Ausgestaltung der Erfindung ist vorgesehen, dass die Erfassung der Übertragungsgüte senderseitig erfolgt. Diese Erfassung erfolgt dabei auf Basis einer Abschätzung von Eigenschaften des Übertragungskanals und/oder des Empfängers. Ein Vorteil dieser Ausgestaltung besteht darin, dass kein Rückkanal von Empfänger zum Sender der optischen Signale erforderlich ist.

Gemäß einer weiteren Ausführungsform der Erfindung wird der Wert eines Symbols weiterhin durch eine Anordnung der Hellzeit innerhalb des Signalverlaufs in einem Pulsbreitenmodulationszyklus kodiert. Diese Ausgestaltung der Erfindung entspricht einer Pulspositionsmodulation, bei der, unbeschadet der erfindungsgemäßen Vorgaben, eine Anordnung der Hellzeit verändert wird. In der einfachsten Ausgestaltung dieser Ausführungsform kann dabei die Position der Hellzeit - d.h. Lichtquelle eingeschaltet - mit der der Dunkelzeit - d.h. Lichtquelle ausgeschaltet - vertauscht werden, um auf diese Weise ein weiteres binäres Bit zu kodieren. Auch die vorgenannte Pulspositionsmodulation führt im Übrigen nicht zu einer wahrnehmbaren Änderung in der eingestellten Helligkeit.

Im Weiteren werden bevorzugte Ausführungsformen der erfindungsgemäßen Vorrichtung und des erfindungsgemäßen Verfahrens unter Bezugnahme auf die Zeichnung zur Erläuterung erfindungswesentlicher Merkmale beschrieben.

Es zeigen:
- Figur 1: eine Prinzipdarstellung einer Ausführungsform der erfindungsgemäßen Vorrichtung zur optischen Übertragung von Daten;
- Figur 2A: ein Signaldiagramm eines mit einer Pulsamplitudenmodulation modulierten optischen Signals mit einer ersten Konstellation übertragener Symbole;
- Figur 2B: ein Signaldiagramm eines mit einer Pulsamplitudenmodulation modulierten optischen Signals mit einer zweiten Konstellation übertragener Symbole; und;
- Figur 2C: ein Signaldiagramm eines mit einer Pulsamplitudenmodulation modulierten optischen Signals mit einer zusätzlichen Pulspositionsmodulation;

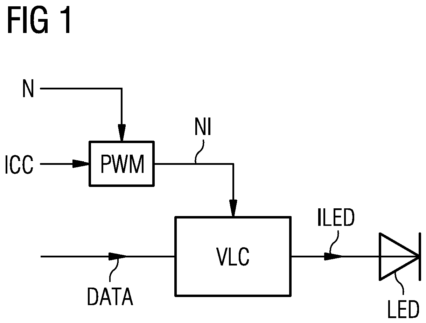

Figur 1 zeigt eine Vorrichtung, bestehend aus einer Lichtquelle LED, einem Pulsbreitenmodulator PWM, durch den ein pulsbreitenmoduliertes Signal NI zur Helligkeitseinstellung der Lichtquelle LED generiert wird und einem Datenmodulationsmodul VLC, durch die das pulsbreitenmodulierte Signal NI mit einer Pulsamplitudenmodulation moduliert wird. Das pulsbreitenmodulierte Signal NI entspricht somit einem Trägersignal NI für die Pulsamplitudenmodulation.

Der Pulsbreitenmodulator PWM wird mit einem Versorgungsstrom ICC gespeist. Der Versorgungsstrom ICC ist beispielsweise ein Gleichstrom mit wählbarer Größe. Eine Helligkeitseinstellung der Lichtquelle LED erfolgt mittels einer Einstellung eines Dimmfaktor N, wobei beispielsweise eine Stellgröße eines entsprechenden - nicht dargestellten - Einstellglieds den Dimmfaktor beeinflusst und die Stellgröße an den Pulsbreitenmodulator PWM zugeführt wird. Der Dimmfaktor N wird in ein Tastverhältnis des vom Pulsbreitenmodulator PWM aufgrund des eingestellten Dimmfaktors N erzeugten Trägersignal NI umgesetzt.

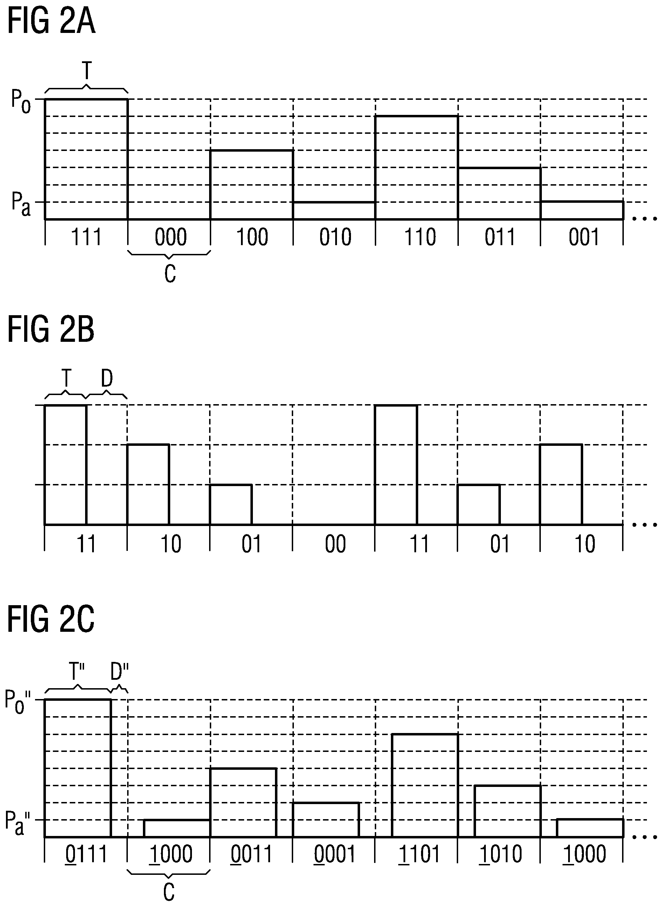

Das Trägersignal NI sowie zu übertragende Daten DATA werden dem Datenmodulationsmodul VLC zugeführt, in welchem aus den zugeführten Daten DATA Symbole gebildet werden, welche entsprechend kodiert und auf das Trägersignal NI aufmoduliert werden, woraufhin ein Strom ILED zur Speisung der Lichtquelle LED synthetisiert wird. Dieser Strom ILED entspricht in seinem zeitlichen Verlauf dem jeweiligen in Figur 2A bis 2C dargestellten optischen Signal.

Es ist hervorzuheben, dass der Betrieb des Datenmodulationsmodul VLC weitgehend unabhängig vom Betrieb des Pulsbreitenmodulators PWM ist. Mit anderen Worten ist die optische Datenübertragung über die Lichtquelle LED weitgehend unabhängig von der Helligkeitseinstellung der Lichtquelle LED zu bewerkstelligen.

In Figur 2A ist ein Signaldiagramm eines mit einer Pulsamplitudenmodulation modulierten optischen Signals dargestellt. Die optische Leistung des optischen Signals ist auf der Ordinate über die Zeit aufgetragen.

In Figur 2A sind sieben Pulsbreitenmodulationszyklen C dargestellt, wobei ein jeweiliger Zyklus C im Allgemeinen aus einer jeweiligen Hellzeit T und einer Dunkelzeit besteht. In der in Figur 2A dargestellten Situation liegt eine Ansteuerung mit einem Dimmfaktor von Null vor, d.h. dass ein jeweiliger Zyklus C vollständig aus einer Hellzeit T besteht. Bei diesem Dimmfaktor N von Null, welcher einer maximalen Helligkeitseinstellung der Lichtquelle LED entspricht, sind also keine Dunkelzeiten innerhalb des Zyklus C vorgesehen und die optische Leistung der Lichtquelle LED entspricht im Mittel der maximal vorgesehenen Helligkeit. Dagegen wäre bei einem - nicht dargestellten - Dimmfaktor von N = 1 die optisch abgestrahlte Leistung nahezu gleich Null, was in der Rezeption eines menschlichen Auges eine nahezu völlige Dunkelheit bedeutet.

In Figur 2A ist die Bezeichnung der jeweiligen Hellzeit T aus Übersichtsgründen lediglich für die erste ganz links abgebildete Hellzeit T dargestellt. Weiterhin ist die Bezeichnung des jeweiligen Zyklus C aus Übersichtsgründen lediglich für den zweiten von links gezählten Pulsbreitenmodulationszyklus C dargestellt.

In einem später detaillierter erläuterten Ausführungsbeispiel gemäß Figur 2B besteht dagegen ein Zyklus C aus einer jeweiligen Hellzeit T und einer Dunkelzeit D. Abhängig vom erwähnten Dimmfaktor N, welcher sich als Quotient zwischen der Dunkelzeit D innerhalb eines Zyklus C sowie der Zyklusdauer C ergibt, ist die Helligkeit der Lichtquelle LED mit einer Pulsbreitenmodulation auf einen entsprechenden Dimmfaktor eingestellt. Der Dimmfaktor N ergibt sich als Quotient zwischen der Dunkelzeit D und dem durch die Zyklusdauer C definierten Tastverhältnis. In Figur 2B ergibt sich also ein Dimmfaktor N bzw. ein Tastverhältnis von 50 %.

Ein jeweiliger Zyklus C gemäß den Figuren 2A bis 2C beginnt jeweils an einer senkrecht zur Abszisse strichliert dargestellten Linie und endet entsprechend an der darauf folgenden strichliert dargestellten Linie. Während der Hellzeit T ist die Lichtquelle angesteuert und strahlt eine optische Leistung mit einem durch eine Amplitudenmodulation eingestellten Wert für die Leistung aus. Während der Dunkelzeit D ist die Lichtquelle abgeschaltet und strahlt eine Leistung ab, die im Wesentlichen gleich Null ist.

Unter weiterer Bezugnahme auf die Darstellung der Figur 2A soll nunmehr die Pulsamplitudenmodulation dargestellt werden. In der dortigen Figur ist eine beispielhafte Sequenz von sieben Symbolwerten dargestellt, welche in Figur 2A jeweils mit Ihrem binären Wert bezeichnet sind, von links also 111, 000, 100, 010, 110, 011 und 001. Dies entspricht einer Konstellation von 3 Bits pro Symbol und einer maximalen Symbolanzahl von 2³ = 8. Der jeweilige Dezimalwert, in dieser Reihenfolge also 7, 0, 4, 2, 6, 3 und 1, wird mit einem Amplitudenwert Pₐ multipliziert und ergibt eine Amplitude wie in der Zeichnung dargestellt. Der Maximalwert P₀ ergibt sich als Produkt aus dem Amplitudenwert Pₐ und dem Dezimalwert des höchsten Symbols, also 7Pₐ. Die durchschnittlich abgestrahlte optische Leistung ergibt sich unter Zugrundlegung von gleichverteilten Symbolwerten zu P₀/2. Die zeitliche Länge eines jeweiligen Symbols ist die gleiche wie die Hellzeit T.

Die Konstellation von drei Bits pro Symbol ist in diesem Ausführungsbeispiel gemäß Figur 2A bei dieser Helligkeitseinstellung mit einem Dimmfaktor N gleich Null so gewählt, dass eine vorgegebene Übertragungsgüte, übererfüllt wird.

Dies ist auch dann noch der Fall, wenn aufgrund einer abgedunkelten Helligkeitseinstellung der Dimmfaktor N erhöht wird, die Hellzeit T innerhalb eines Zyklus C also verkürzt wird und im Zyklus C eine Dunkelzeit D hinzutritt.

Eine Übertragungsgüte kann dabei anhand eines Signal-Rausch-Verhältnis oder anhand eines Bitfehlerquotienten an einem - nicht dargestellten - Empfänger beurteilt werden.

Wird bei weiterer Verkürzung der Hellzeit T innerhalb eines Zyklus C eine vorgegebene Übertragungsgüte unterschritten, so wird die Konstellation erfindungsgemäß angepasst. Mittel zur Einstellung der Konstellation der Symbole aufgrund der Übertragungsgüte sind beispielsweise im Datenmodulationsmodul VLC gemäß Figur 1 vorgesehen.

Im Ausführungsbeispiel gemäß Figur 2B ist eine Situation mit einem Dimmfaktor N von 0,5 dargestellt, bei der Konstellation, also die Anzahl der Bits pro Symbol um eins gesenkt wurde. Es ergibt sich eine Konstellation von zwei Bits pro Symbol und einer maximalen Symbolanzahl von 2² = 4. In der Figur 2B ist eine beispielhafte Sequenz von sieben Symbolwerten dargestellt, welche jeweils mit Ihrem binären Wert bezeichnet sind, von links also 11, 10, 01, 00, 11, 01 und 10. Dies entspricht einem jeweiligen dezimalen Symbolwert von 3, 2, 1, 0, 3, 1 und 2.

Aus der Praxis hat sich gezeigt, dass eine Reduktion der Konstellation ungefähr bei einer Halbierung der Hellzeit T durchgeführt werden muss.

Das Signal-Rausch-Verhältnis der gesendeten Daten kann entweder senderseitig, beruhend auf verschiedenen Annahmen über den Übertragungskanal als auch den Empfänger, ermittelt werden, oder empfängerseitig aus dem empfangenen Signal und dem Signalrauschen ermittelt werden. Eine weitere Methode ist die Ermittlung des Bitfehlerquotienten. Die empfängerseitige Ermittlung des Signal-Rausch-Verhältnisses oder des Bitfehlerquotienten für die Bestimmung der geeigneten Modulationsstufe setzt eine Duplexverbindung zwischen Sender und Empfänger voraus. Anhand der des Signal-Rausch-Verhältnisses und/oder des Bitfehlerquotienten wird die Übertragungsgüte bestimmt.

Mittel zur Erfassung der Übertragungsgüte zwischen der Lichtquelle LED und einer Senke des optischen Signals, beispielsweise ein - nicht dargestelltes - portables Datengerät, sind beispielsweise im Datenmodulationsmodul VLC gemäß Figur 1 vorgesehen.

In Figur 2C ist eine zusätzliche Anwendung einer Pulspositionsmodulation dargestellt, welche auch als VPM (»Variable Pulse-Position Modulation«) bezeichnet wird. Dabei wird beispielsweise, wie dargestellt, eine binäre Pulspositionsmodulation angewandt. In der Figur 2C ist eine beispielhafte Sequenz von sieben Symbolwerten dargestellt, welche jeweils mit ihrem binären Wert bezeichnet sind, von links also 0111, 1000, 0011, 0001, 1101, 1010 und 10000. Dies entspricht, wie später erläutert, einem jeweiligen dezimalen Symbolwert von 7, 0, 3, 1, 5, 2 und 0.

Im dieser einfachsten Ausführung einer binären Pulspositionsmodulation - in Abgrenzung zu einer Vielzahl möglicher Pulspositionen - wird ein binärer Zustand einer Position der Hellphase T" innerhalb eines Zyklus zugewiesen. Ist die Hellphase T" am Anfang des Zyklus angeordnet, weist das zugehörige Symbol eine Kodierung von 0 im vierten Bit auf, ist die Hellphase T" am Ende des Zyklus angeordnet, weist das zugehörige Symbol eine Kodierung von 1 im vierten Bit auf. Das vierte Bit ist in der binären Darstellung der Symbole, von links also 0111, 1000, 0011, 0001, 1101, 1010 und 10000, jeweils durch eine Unterstreichung gekennzeichnet.

In Figur 2C ist ein Dimmfaktor von Null eingestellt. Um die Positionsmodulation zu ermöglichen, muss das Tastverhältnis schon bei einem Dimmfaktor von Null kleiner als eins sein, also, im Unterschied zum Ausführungsbeispiel gemäß Figur 2A, auch bei einem Dimmfaktor von Null bereits eine Dunkelzeit D" aufweisen, um die Positionsbestimmung des Hellzeitpulses T" innerhalb des Zyklus C überhaupt zu ermöglichen.

Außerdem muss die Amplitude für das Symbol mit der kleinsten Sendeleistung, also sowohl das Symbol mit dem dezimalen Wert 0 und dem binären Wert 0000 als auch das Symbol mit dem dezimalen Wert 8 und dem binären Wert 1000, einen Amplitudenwert von größer als Null haben, um die Positionsbestimmung des Hellzeitpulses T" innerhalb des Zyklus C überhaupt zu ermöglichen.

Im anhand der Figur 2C gezeigten Ausführungsbeispiel wurden alle Amplitudenstufen der Sendeleistung gegenüber Figur 1a um eine Stufe erhöht, so dass sich auf der Abszisse zeichnerisch insgesamt, einschließlich der Amplitude mit dem Wert Null, 9 mögliche Amplitudenstufen ergeben, wobei die Amplitude mit dem Wert Null aus dem oben genannten Gründen nicht verwendet wird, so dass sich in Übereinstimmung mit dem in Figur 2A dargestellten Diagramm insgesamt 8 mögliche Amplitudenstufen ergeben. Im gezeigten Beispiel der Figur 2C ist die Sendeleistung aller Symbole gegenüber Figur 2A um eine Amplitudenstufe erhöht.

Um die gleiche durchschnittlich gesendete optische Leistung zu erreichen, muss die Spitzenleistung P₀", also die maximale Amplitude für die Symbole mit der größten Sendeleistung P₀", aufgrund der Einfügung der zusätzlichen Dunkelzeit D erhöht werden. Die Symbole mit der größten Sendeleistung P₀" umfassen sowohl das Symbol mit dem dezimalen Wert 7 und dem binären Wert 0111 als auch das - nicht dargestellte - Symbol mit dem dezimalen Wert 15 und dem binären Wert 1111.

Um die gleiche durchschnittlich gesendete optische Leistung zu erreichen, muss die Spitzenleistung P₀" der Symbols mit der höchsten Leistung um den Faktor C/T" gegenüber der Spitzenleistung P₀ gemäß Figur 2A erhöht werden, also P₀" = C/T" P₀.

Auch für die übrigen Amplitudenstufen gilt die Erhöhung um den oben genannten Faktor.

Zusammenfassend wird also bei einer Helligkeitseinstellung des optischen Signals mit einem Wert des Tastverhältnisses von eins, entsprechend einem Dimmfaktor von Null, eine zusätzliche Dunkelzeit D" eingefügt und dabei das tatsächliche Tastverhältnis verändert, um eine Datenübertragung mit einer Pulspositionsmodulation auch für diesen Dimmfaktor zu gewährleisten. Die jeweilige Amplitude der jeweils zu übertragenden Symbole wird darauf angepasst, um die gleiche Durchschnittsleistung zu gewährleisten.

Genauer gesagt wird die jeweilige Amplitude der jeweils zu übertragenden Symbole mit einem Faktor multipliziert wird, der einem Quotienten aus einer zeitlichen Dauer des Pulsbreitenmodulationszyklus (C) und einer zeitlichen Dauer der Hellzeit (T") entspricht.

Die obigen Maßnahmen einer Erhöhung der optischen Leistung sind nur im Fall einer nicht durch die Helligkeitseinstellung, sondern durch das Erfordernis der Kodierung mittels einer Pulspositionsmodulation motivierten Einfügung einer Dunkelzeit T" erforderlich. Für den Fall, dass die Helligkeitseinstellung ohnehin eine Dunkelzeit erfordert, ist eine Anpassung der Amplitudenstufen nicht erforderlich.

Das erfindungsgemäße Verfahren zur optischen Übertragung von Daten verursacht keine Radiowellen und kann auch nicht durch Radiowellen beeinflusst werden. Das erfindungsgemäße Verfahren kann insbesondere dann eingesetzt werden, wenn bereits eine Beleuchtung mittels Leuchtdioden vorgesehen ist. Dabei können die Leuchtdioden beispielsweise mit einem Powerline-Übertragungsverfahren adressiert werden.

Die Übertragung der Daten erfolgt mittels eines leicht abschirmbaren Kommunikationsmediums. Da die Daten optisch übertragen werden, kann man sie beispielsweise leicht mit einer Wand oder einem Vorhang von einer Umgebung abschirmen. Es kann daher leicht Abhörsicherheit erreicht werden.

Das erfindungsgemäße Verfahren erlaubt die sichere optische Übertragung von Daten über eine dimmbare Leuchtdiode zu tragbaren Endgeräten innerhalb eines beleuchteten Raumes und ist unempfindlich gegenüber Funksignalen. Es können beliebige Leuchtdioden LED eingesetzt werden, beispielsweise Leuchtdioden, die ein weißes Licht erzeugen.

## Patentansprüche

1. Verfahren zur Übertragung von Daten mittels eines optischen Signals,
- bei dem für eine Helligkeitseinstellung des optischen Signals eine Pulsbreitenmodulation mit einem Tastverhältnis als Verhältnis zwischen einer Hellzeit (T) des optischen Signals und einer Periodenlänge (C) eines Pulsbreitenmodulationszyklus einstellbar ist;
- wobei eine Kodierung der zu übertragenden Daten (DATA) in Symbolen erfolgt, wobei das optische Signal während der Hellzeit (T) mit einer Pulsamplitudenmodulation moduliert wird, bei der eine Amplitude des optischen Signals gemäß dem zu übertragenden Symbol eingestellt wird;
- wobei zwischen einer Quelle und einer Senke des optischen Signals eine Übertragungsgüte des optischen Signals erfasst wird;
- wobei an der Quelle des optischen Signals in Abhängigkeit von der Übertragungsgüte eine die Anzahl der pro Symbol übertragbaren Bits bezeichnende Konstellation der Symbole eingestellt wird,
- **dadurch gekennzeichnet, dass**
- bei einem eingestellten Tastverhältnis die optische Leistung der Lichtquelle mit einem Faktor multipliziert wird, der einem Quotienten aus einer zeitlichen Dauer des Pulsbreitenmodulationszyklus (C) und einer zeitlichen Dauer der Hellzeit (T'') entspricht.

2. Verfahren nach Anspruch 1,
**dadurch gekennzeichnet,**
**dass** die während einer Hellzeit des optischen Signals eingestellte Amplitude innerhalb dieser Hellzeit (T) konstant bleibt.

3. Verfahren nach einem der vorgenannten Ansprüche,
**dadurch gekennzeichnet,**
**dass** im Fall einer einen Schwellwert unterschreitenden Übertragungsgüte die Anzahl der pro Symbol übertragbaren Bits um einen Wert von eins gesenkt wird.

4. Verfahren nach einem der vorgenannten Ansprüche,
**dadurch gekennzeichnet,**
**dass** die Erfassung der Übertragungsgüte empfängerseitig erfolgt.

5. Verfahren nach Anspruch 4,
**dadurch gekennzeichnet,**
**dass** die Erfassung der Übertragungsgüte anhand einer jeweils am Empfänger gemessenen Signalstärke und Rauschstärke erfolgt.

6. Verfahren nach Anspruch 4,
**dadurch gekennzeichnet,**
**dass** die Erfassung der Übertragungsgüte anhand eines Bitfehlerquotienten erfolgt.

7. Verfahren nach einem der Ansprüche 4 bis 6,
**dadurch gekennzeichnet,**
**dass** die empfängerseitig erfasste Übertragungsgüte und/oder Änderungen in der empfängerseitig erfassten Übertragungsgüte an die Quelle des optischen Signals gemeldet werden.

8. Verfahren nach einem der Ansprüche 1 bis 3,
**dadurch gekennzeichnet,**
**dass** die Erfassung der Übertragungsgüte senderseitig auf Basis einer Abschätzung von Eigenschaften des Übertragungskanals und/oder des Empfängers erfolgt.

9. Verfahren nach einem der vorgenannten Ansprüche,
wobei ein Wert des zu übertragenden Symbols zumindest teilweise durch eine Anordnung der Hellzeit innerhalb des Pulsbreitenmodulationszyklus kodiert wird.

10. Verfahren nach Anspruch 9,
**dadurch gekennzeichnet,**
**dass** bei einer Helligkeitseinstellung des optischen Signals mit einem Wert des Tastverhältnisses von eins eine zusätzliche Dunkelzeit (D'') eingefügt wird und die jeweilige Amplitude der zu übertragenden Symbole angepasst wird.

11. Verfahren nach einem der vorgenannten Ansprüche,
wobei das optische Signal von einer lichtemittierenden Diode abgestrahlt wird.

12. Verfahren nach einem der vorgenannten Ansprüche,
wobei die Daten drahtlos mit einem mobilen Endgerät ausgetauscht werden.

13. Vorrichtung zur optischen Übertragung von Daten mittels einer pulsbreitenmodulierten Lichtquelle (LED) mit:
- einem Datenmodulationsmodul (VLC) zur Entgegennahme von zu übertragenden Daten (DATA) und gemäß eines zur Helligkeitseinstellung pulsbreitenmodulierten Trägersignals (NI), das Datenmodulationsmodul (VLC) weiter eingerichtet zur Kodierung der zu übertragenden Daten (DATA) in Symbolen, wobei das optische Signal während der Hellzeit (T) mit einer Pulsamplitudenmodulation moduliert wird, bei der eine Amplitude des optischen Signals gemäß dem zu übertragenden Symbol eingestellt wird;
- Mittel zur Erfassung einer Übertragungsgüte zwischen einer Quelle und einer Senke des optischen Signals; und;
- Mittel zur Einstellung einer die Anzahl der pro Symbol übertragbaren Bits bezeichnenden Konstellation der Symbole aufgrund der Übertragungsgüte;
- **dadurch gekennzeichnet, dass** bei einem eingestellten Tastverhältnis die optische Leistung der Lichtquelle mit einem Faktor multipliziert wird, der einem Quotienten aus einer zeitlichen Dauer des Pulsbreitenmodulationszyklus (C) und einer zeitlichen Dauer der Hellzeit (T") entspricht.

14. Vorrichtung gemäß Anspruch 13 mit Mitteln zur Ausführung eines Verfahrens nach einem der Ansprüche 2 bis 12.

## Claims

1. Method for transmitting data by means of an optical signal,
- in which pulse width modulation having a duty ratio as the ratio between a bright time (T) of the optical signal and a period length (C) of a pulse width modulation cycle can be set for a brightness setting of the optical signal;
- wherein the data (DATA) to be transmitted are coded into symbols, wherein, during the bright time (T), the optical signal is modulated with pulse amplitude modulation in which an amplitude of the optical signal is set according to the symbol to be transmitted;
- wherein a transmission quality of the optical signal is captured between a source and a sink of the optical signal;
- wherein a constellation of the symbols which indicates the number of bits which can be transmitted per symbol is set at the source of the optical signal on the basis of the transmission quality,
- **characterized in that**
- if a duty ratio has been set, the optical power of the light source is multiplied by a factor which corresponds to a quotient of a temporal duration of the pulse width modulation cycle (C) and a temporal duration of the bright time (T").

2. Method according to Claim 1,
**characterized**
**in that** the amplitude set during a bright time of the optical signal remains constant within this bright time (T).

3. Method according to one of the above-mentioned claims,
**characterized**
**in that**, in the event of a transmission quality which undershoots a threshold value, the number of bits which can be transmitted per symbol is reduced by a value of one.

4. Method according to one of the above-mentioned claims,
**characterized**
**in that** the transmission quality is captured at the receiver end.

5. Method according to Claim 4,
**characterized**
**in that** the transmission quality is captured on the basis of a signal strength and a noise strength respectively measured at the receiver.

6. Method according to Claim 4,
**characterized**
**in that** the transmission quality is captured on the basis of a bit error quotient.

7. Method according to one of Claims 4 to 6,
**characterized**
**in that** the transmission quality captured at the receiver end and/or changes in the transmission quality captured at the receiver end is/are reported to the source of the optical signal.

8. Method according to one of Claims 1 to 3,
**characterized**
**in that** the transmission quality is captured at the transmitter end on the basis of an estimation of properties of the transmission channel and/or of the receiver.

9. Method according to one of the above-mentioned claims, wherein a value of the symbol to be transmitted is at least partially coded by means of an arrangement of the bright time within the pulse width modulation cycle.

10. Method according to Claim 9,
**characterized**
**in that**, in the case of a brightness setting of the optical signal with a value of the duty ratio of one, an additional dark time (D") is inserted and the respective amplitude of the symbols to be transmitted is adapted.

11. Method according to one of the above-mentioned claims, wherein the optical signal is emitted by a light-emitting diode.

12. Method according to one of the above-mentioned claims, wherein the data are wirelessly interchanged with a mobile terminal.

13. Apparatus for optically transmitting data by means of a pulse-width-modulated light source (LED), having:
- a data modulation module (VLC) for receiving data (DATA) to be transmitted and a carrier signal (NI) which is pulse-width-modulated for the brightness setting, wherein the data modulation module (VLC) is also set up to code the data (DATA) to be transmitted into symbols, wherein, during the bright time (T), the optical signal is modulated with pulse amplitude modulation in which an amplitude of the optical signal is set according to the symbol to be transmitted;
- means for capturing a transmission quality between a source and a sink of the optical signal; and
- means for setting a constellation of the symbols which indicates the number of bits which can be transmitted per symbol on the basis of the transmission quality;
- **characterized in that**
if a duty ratio has been set, the optical power of the light source is multiplied by a factor which corresponds to a quotient of a temporal duration of the pulse width modulation cycle (C) and a temporal duration of the bright time (T").

14. Apparatus according to Claim 13, having means for carrying out a method according to one of Claims 2 to 12.

## Revendications

1. Procédé de transmission de données au moyen d'un signal optique :
- dans lequel, pour régler la luminosité du signal optique, il est possible de régler une modulation de largeur d'impulsion au moyen d'un rapport cyclique qui est le rapport entre la durée de luminosité (T) du signal optique et la durée de période (C) d'un cycle de modulation de largeur d'impulsion,
- dans lequel un codage des données (DATA) à transmettre est réalisé sous forme de symboles, le signal optique pendant la durée de luminosité (T) étant modulé par une modulation d'amplitude d'impulsion dans laquelle l'amplitude du signal optique est définie en fonction du symbole à transmettre,
- dans lequel la qualité de transmission du signal optique est détectée entre la source et le récepteur du signal optique, et
- dans lequel, en fonction de la qualité de transmission, on ajuste à la source du signal optique une constellation des symboles décrivant le nombre de bits pouvant être transmis par symbole,
**caractérisé en ce que**, dans un rapport cyclique défini, la puissance optique de la source lumineuse est multipliée par un facteur qui correspond à un quotient d'une durée du cycle de modulation de largeur d'impulsion (C) et d'une durée de la durée de luminosité (T").

2. Procédé selon la revendication 1, **caractérisé en ce que** l'amplitude réglée pendant une durée de luminosité du signal optique demeure constante au cours de cette durée de luminosité (T).

3. Procédé selon l'une des revendications précédentes, **caractérisé en ce que** lorsque la qualité de transmission devient inférieure à une valeur seuil, le nombre de bits pouvant être transmis par symbole est diminué d'une valeur de un.

4. Procédé selon l'une des revendications précédentes, **caractérisé en ce que** la détection de la qualité de transmission s'effectue du côté récepteur.

5. Procédé selon la revendication 4, **caractérisé en ce que** la détection de la qualité de transmission s'effectue sur la base d'une intensité de signal et d'une intensité de bruit mesurées respectivement au niveau du récepteur.

6. Procédé selon la revendication 4, **caractérisé en ce que** la détection de la qualité de la transmission s'effectue sur la base d'un taux d'erreur sur les bits.

7. Procédé selon l'une des revendications 4 à 6, **caractérisé en ce que** la qualité de transmission détectée du côté récepteur et/ou des modifications de la qualité de réception détectée du côté récepteur sont notifiées à la source du signal optique.

8. Procédé selon l'une des revendications 1 à 3, **caractérisé en ce que** la détection de la qualité de transmission est effectuée du côté émetteur sur la base d'une évaluation des caractéristiques du canal de transmission et/ou du récepteur.

9. Procédé selon l'une des revendications précédentes, dans lequel une valeur du symbole à transmettre est codée au moins en partie par une spécification de la durée de luminosité dans le cycle de modulation de largeur d'impulsion.

10. Procédé selon la revendication 9, **caractérisé en ce que** lors d'un réglage de luminosité du signal optique avec une valeur du rapport cyclique de un, une durée d'obscurité (D") complémentaire est ajoutée et l'amplitude respective des symboles à transmettre est ajustée.

11. Procédé selon l'une des revendications précédentes, dans lequel le signal optique est émis par une diode électroluminescente.

12. Procédé selon l'une des revendications précédentes, **caractérisé en ce que** les données sont échangées par une liaison sans fil avec un terminal mobile.

13. Dispositif de transmission optique de données au moyen d'une source de lumière (LED) modulée en largeur d'impulsion comprenant :
- un module de modulation de données (VLC) destiné à recevoir des données (DATA) à transmettre, selon un signal porteur modulé en largeur d'impulsion pour le réglage de la luminosité, le module de modulation de données (VLC) étant configuré en outre pour coder les données (DATA) à transmettre en symboles, dans lequel le signal optique est modulé pendant la durée de luminosité (T) avec une modulation d'amplitude d'impulsion, par laquelle l'amplitude du signal optique est ajustée en fonction du symbole à transmettre,
- des moyens pour détecter la qualité de transmission entre une source et un récepteur du signal optique, et
- des moyens pour définir une constellation des symboles indiquant le nombre de bits pouvant être transmis par symbole sur la base de la qualité de la transmission, **caractérisé en ce que**, dans un rapport cyclique déterminé, la puissance optique de la source lumineuse est multipliée par un facteur qui correspond au quotient d'une durée du cycle de modulation de largeur d'impulsion (C) et d'une durée de la durée de luminosité (T").

14. Dispositif selon la revendication 13, comprenant des moyens pour exécuter un procédé selon l'une des revendications 2 à 12.
